# EUROPEAN PATENT APPLICATION

(11) **EP 4 618 280 A1**
(43) Date of publication of application: **17.09.2025**
(21) Application number: 23888423.3
(22) Date of filing: 13.10.2023
(51) Int. Cl.: H01M 50/244

(54) **BATTERY PACK AND REMOVAL METHOD FOR BATTERY MODULE**

(30) Priority: 07.11.2022 JP 2022178020
(71) Applicant: AESC Japan Ltd., Kanagawa, 2520012 (JP)
(72) Inventor: YAMAMURA Yousuke, Zama-shi, Kanagawa 252-0012 (JP)
(74) Representative: Mathys & Squire
(86) International application number: PCT/JP2023/037182
(87) International publication number: WO 2024/101070

(57) **Abstract**

A battery pack (10) includes an accommodation body (200), and a battery module (100) accommodated in the accommodation body (200). The battery module (100) defines a left tapped hole (132) and a right tapped hole (134) overlapping at least a portion of the accommodation body (200).

## Description

### TECHNICAL FIELD

The present invention relates to a battery pack and a method of removing a battery module.

### BACKGROUND ART

In recent years, various battery packs having a plurality of battery modules have been developed. In a battery module described in Patent Document 1, for example, the battery module is fixed to an accommodation body. In the battery module, a thermally conductive member is provided between the battery module and the accommodation body. The thermally conductive member is formed by coating.

### RELATED DOCUMENT

### PATENT DOCUMENT

Patent Document 1: International Patent Publication No. WO2017/47211

### SUMMARY OF THE INVENTION

### TECHNICAL PROBLEM

In the battery pack described in Patent Document 1, for example, the battery module may be removed from the accommodation body. It may be, however, difficult to improve workability of removing the battery module from the accommodation body by simply lifting the battery module from the accommodation body. For example, the battery module itself may be relatively heavy. In this case, it may be difficult to lift the battery module. Moreover, it may be difficult to detach the battery module from the accommodation body when the battery module and the accommodation body are joined via a thermally conductive member.

One example of an object of the present invention is to improve workability of removing the battery module from the accommodation body. Another object of the present invention will become apparent from description of the present specification.

### SOLUTION TO PROBLEM

One aspect of the present invention is as follows.
[1] A battery pack including:
   an accommodation body; and
   a battery module accommodated in the accommodation body, wherein
   the battery module defines a tapped hole overlapping at least a portion of the accommodation body.
[2] The battery pack according to [1], wherein
   the tapped hole is located at at least one of a substantially central portion of the battery module in a direction substantially parallel to a direction in which the tapped hole extends through the battery module, and a portion displaced from the substantially central portion of the battery module from a side where the at least a portion of the accommodation body is located toward a side where the tapped hole is located.
[3] The battery pack according to [1], wherein
   the tapped hole is located at a substantially central portion of the battery module in a direction substantially parallel to a direction in which the tapped hole extends through the battery module.
[4] The battery pack according to any one of [1] to [3], wherein
   at least two of the tapped holes are provided in opposite regions of the battery module.
[5] The battery pack according to any one of [1] to [4], wherein
   the at least a portion of the accommodation body has at least a portion of a frame surrounding at least a portion of the battery module.
[6] A method of removing a battery module including:
   a step of screwing a penetrating member into a tapped hole of a battery module accommodated in an accommodation body; and
   a step of further screwing the penetrating member into the tapped hole with at least a portion of the penetrating member and at least a portion of the accommodation body overlapping with the tapped hole in contact with each other.
[7] The method of removing the battery module according to [6], wherein
   the tapped hole is located at at least one of a substantially central portion of the battery module in a direction substantially parallel to a direction in which the tapped hole extends through the battery module, and a portion displaced from the substantially central portion of the battery module from a side where the at least a portion of the accommodation body is located toward a side where the tapped hole is located.
[8] The method of removing the battery module according to [6], wherein
   the tapped hole is located at a substantially central portion of the battery module in a direction substantially parallel to a direction in which the tapped hole extends through the battery module.
[9] The method of removing the battery module according to any one of [6] to [8], wherein
   at least two of the tapped holes are provided in opposite regions of the battery module.
[10] The method of removing the battery module according to any one of [6] to [9], wherein
   the at least a portion of the accommodation body has at least a portion of a frame surrounding at least a portion of the battery module.
[11] The method of removing the battery module according to any one of [6] to [10], further including
   a step of pulling up the battery module by pulling up the penetrating member with the penetrating member screwed into the tapped hole.

### ADVANTAGEOUS EFFECTS OF INVENTION

According to the aspect of the present invention described above, the workability of removing the battery module from the accommodation body can be improved.

### BRIEF DESCRIPTION OF THE DRAWINGS

[Fig. 1] A perspective view of a battery pack according to an embodiment.
[Fig. 2] A plan view of the battery pack according to the embodiment with an upper case removed.
[Fig. 3] A plan view of the battery module according to the embodiment.
[Fig. 4] An A-A cross-sectional view of Fig. 3.
[Fig. 5] A view for describing one example of a method of removing the battery module from a lower case.
[Fig. 6] A view for describing one example of the method of removing the battery module from the lower case.

### DESCRIPTION OF EMBODIMENTS

Hereinafter, an embodiment of the present invention is described by use of the drawings. In all drawings, a similar component is assigned with a similar reference sign, and description thereof is omitted as appropriate.

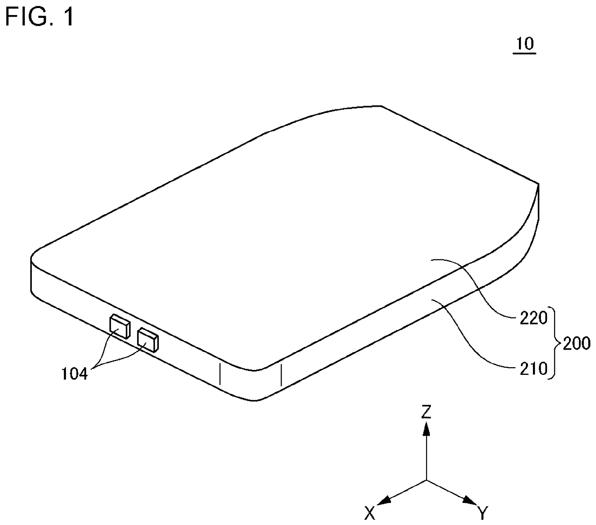

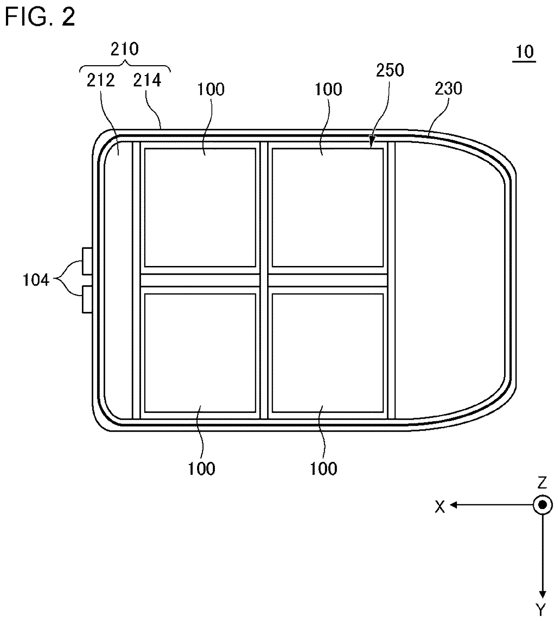

Fig. 1 is a perspective view of a battery pack 10 according to the embodiment. Fig. 2 is a plan view of the battery pack 10 according to the embodiment with an upper case 220 removed.

In the embodiment, the battery pack 10 is mounted on an automobile. Specifically, the battery pack 10 is mounted between a front wheel and a rear wheel of the automobile. Unless otherwise specified, the battery pack 10 is described as being mounted on the automobile. The battery pack 10, however, is also applicable to a purpose other than an automobile.

In each figure, an X direction, a Y direction, and a Z direction are illustrated for description. The X direction indicates a front-rear direction of the battery pack 10. The Y direction is orthogonal to the X direction. The Y direction indicates a left-right direction of the battery pack 10. The Z direction is orthogonal to both the X direction and the Y direction. The Z direction indicates an upward-downward direction of the battery pack 10. The arrow pointing in the X direction, and arrows pointing in the Y direction and pointing in the Z direction indicate a front direction, a left direction, and an upward direction of the battery pack 10, respectively. In Fig. 2, the white circle with the black dot indicating the Z direction indicates that the arrow pointing to the Z direction extends from the back side to the front side of the paper. The relationship between the X direction, the Y direction, and the Z direction, and the front-rear direction, the left-right direction, and the upward-downward direction of the battery pack 10, however, are not limited to this example.

In the embodiment, the front-rear direction, the left-right direction, and the upward-downward direction of the battery pack 10 are determined by an automobile in which the battery pack 10 is mounted. The X direction, the Y direction, and the Z direction indicate the front-rear direction, the left-right direction, and the upward-downward direction of the automobile respectively. The arrow pointing in the X direction, the arrow pointing in the Y direction, and the arrow pointing in the Z direction indicate the front direction, the left direction, and the upward direction of the automobile respectively. The relationship between the front-back direction, the left-right direction, and the upward-downward direction of the battery pack 10, and the front-back direction, the left-right direction, and the upward-downward direction of the automobile, however, are not limited to this example.

Hereinafter, a direction perpendicular to the Z direction is referred to as a horizontal direction according to necessity.

The battery pack 10 includes four battery modules 100 and an accommodation body 200. The four battery modules 100 include a pair of the left battery modules 100 arranged in the X direction, and a pair of the right battery modules 100 arranged in the X direction. The accommodation body 200 includes a lower case 210 and an upper case 220. The lower case 210 may also be generally referred to as, for example, a tray or a main body portion. The lower case 210 includes a lower plate 212 and a side frame 214. The upper case 220 may also be generally referred to as, for example, a cover or a lid portion. Each of the battery modules 100 includes a plurality of battery cells 102 as described below.

A pair of terminals 104 is provided in front of the side frame 214. The pair of terminals 104 is arranged substantially parallel in the Y direction. The front end portion of each of the terminals 104 projects forward from the front surface of the side frame 214. The four battery modules 100 are connected in series between the pair of terminals 104 in an electric path.

The lower case 210 and the upper case 220 are attached to each other via a sealing member 230. The lower case 210, the upper case 220, and the sealing member 230 form an accommodation space 250. The accommodation space 250 accommodates the four battery modules 100.

The lower plate 212 defines a bottom portion of the accommodation space 250. The side frame 214 defines a side portion of the accommodation space 250. Specifically, the side frame 214 is provided along the outermost circumference of the lower plate 212 when viewed from the Z direction. The upper case 220 defines a top portion of the accommodation space 250.

The sealing member 230 is, for example, an elastic material such as rubber. The sealing member 230 is provided over the entire circumference of the side frame 214 when viewed from the Z direction. Thus, the sealing member 230 surrounds the accommodation space 250 when viewed from the Z direction. The accommodation space 250 can be therefore sealed from a space outside the accommodation body 200 by the sealing member 230.

The number and arrangement of the battery modules 100 are not limited to the example according to the embodiment. For example, the number of battery modules 100 may be only two, only three, or five or more.

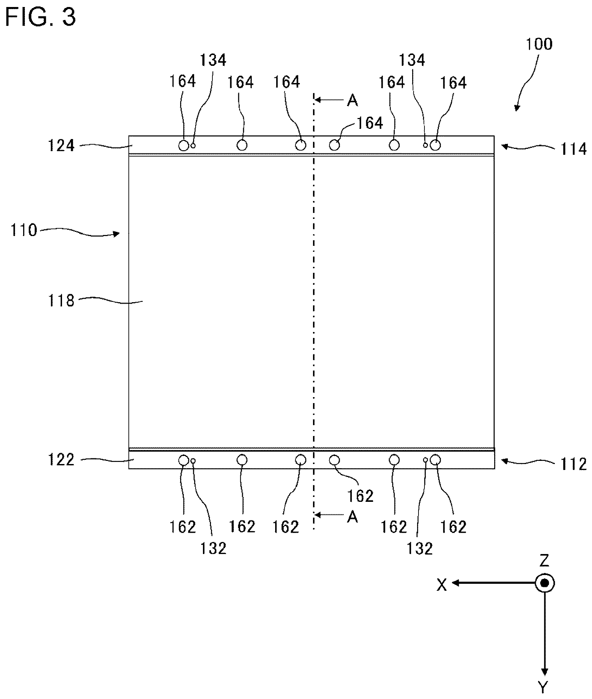

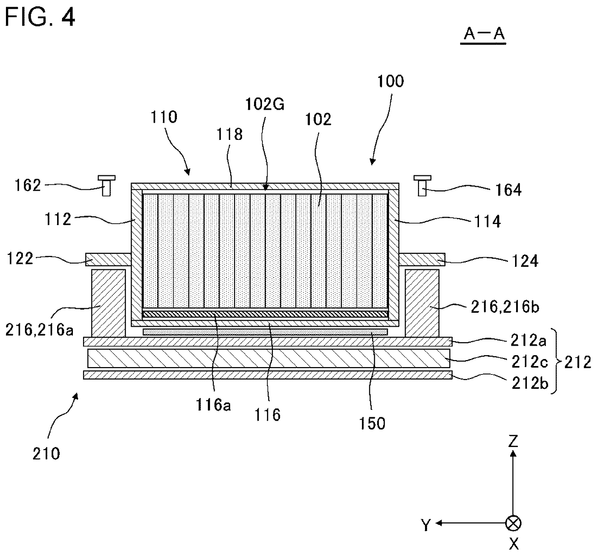

Fig. 3 is a plan view of the battery module 100 according to the embodiment. Fig. 4 is an A-A cross-sectional view of Fig. 3. In Fig. 4, the white circle with the X indicating the X direction indicates that the arrow pointing in the X direction extends from the front side to the back side of the paper.

As illustrated in Fig. 4, the battery module 100 includes a cell stack 102G and an accommodation case 110.

The cell stack 102G includes a plurality of the battery cells 102. In the example illustrated in Fig. 4, a plurality of the battery cells 102 is laminated substantially parallel in the Y direction. In the cell stack 102G, for example, a plurality of battery cell groups including a plurality of the battery cells 102 connected in parallel is connected in series. Alternatively, a plurality of the single battery cells 102 may be connected in series.

The accommodation case 110 accommodates the cell stack 102G. The accommodation case 110 includes a left cover 112, a right cover 114, a lower cover 116, an upper cover 118, a non-illustrated front cover, and a non-illustrated rear cover. The left cover 112 covers the left side of the cell stack 102G. The right cover 114 covers the right side of the cell stack 102G. The lower cover 116 covers the lower surface of the cell stack 102G via a thermally conductive adhesive 116a. The upper cover 118 covers the upper surface of the cell stack 102G. The non-illustrated front cover covers the front surface of the cell stack 102G. The non-illustrated rear cover covers the rear surface of the cell stack 102G.

The lower plate 212 includes an upper cooling plate 212a and a lower cooling plate 212b. The upper cooling plate 212a and the lower cooling plate 212b overlap in the Z direction. A refrigerant 212c flows in a region between the lower surface of the upper cooling plate 212a and the upper surface of the lower cooling plate 212b. The refrigerant 212c is, for example, a liquid such as water.

The lower case 210 includes a support frame 216. When viewed from the Z direction, the support frame 216 is a surrounding body surrounding at least a portion of the cell stack 102G. The support frame 216 is provided on the upper surface of the upper cooling plate 212a. Hereinafter, according to necessity, a portion of the support frame 216 located on the left side of the cell stack 102G is referred to as a left support portion 216a. Hereinafter, according to necessity, a portion of the support frame 216 located on the right side of the cell stack 102G is referred to as a right support portion 216b.

A left protrusion 122 is provided on the left outer surface of the left cover 112. The left protrusion 122 protrudes toward the left side of the left cover 112. The left protrusion 122 is arranged the an upper surface of the left support portion 216a. The left protrusion 122 and the left support portion 216a are fastened to each other by a plurality of left bolts 162. As illustrated in Fig. 3, a plurality of the left bolts 162 is arranged substantially parallel in the X direction. The number and arrangement of the left bolts 162, however, are not limited to the example illustrated in Fig. 3. For example, the left protrusion 122 and the left support portion 216a may be fastened to each other by only the single left bolt 162.

A right protrusion 124 is provided on the right outer surface of the right cover 114. The right protrusion 124 protrudes toward the right side of the right cover 114. The right protrusion 124 is arranged on the upper surface of the right support portion 216b. The right protrusion 124 and the right support portion 216b are fastened to each other by a plurality of right bolts 164. As illustrated in Fig. 3, a plurality of the right bolts 164 is arranged substantially parallel in the X direction. The number and arrangement of the right bolts 164, however, are not limited to the example illustrated in Fig. 3. For example, the right protrusion 124 and the right support portion 216b may be fastened to each other by only the single right bolt 164.

The battery module 100 is mounted on the lower plate 212 via a filler 150. The filler 150 is arranged between the lower surface of the lower cover 116 and the upper surface of the upper cooling plate 212a. The filler 150 is compressed in the Z direction by the lower surface of the lower cover 116 and the upper surface of the upper cooling plate 212a.

In the embodiment, the filler 150 is a thermally conductive adhesive. The lower surface of the lower cover 116 and the upper surface of the upper cooling plate 212a are therefore physically joined via the filler 150. For this reason, the lower cover 116 and the upper cooling plate 212a can be less likely to shift from each other as compared to the case where the filler 150 is not provided. Further, the lower surface of the lower cover 116 and the upper surface of the upper cooling plate 212a are thermally coupled via the filler 150. For this reason, the heat generated in the battery module 100 can be easily dissipated to the lower case 210 via the thermally conductive adhesive 116a, the lower cover 116, and the filler 150 as compared to the case where the filler 150 is not provided.

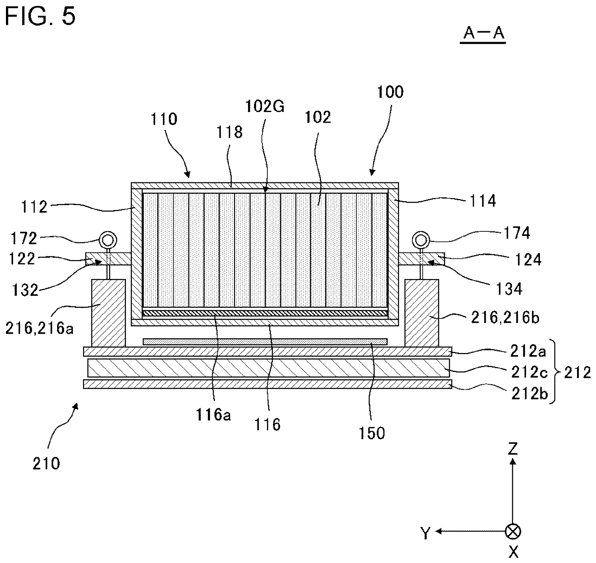

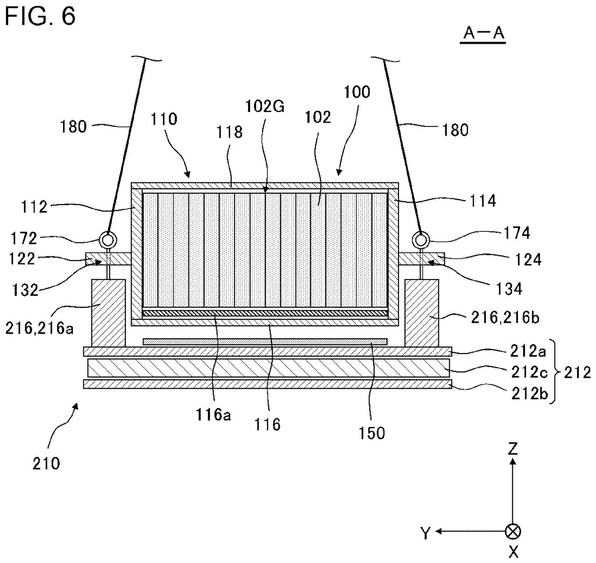

Figs. 5 and 6 are views for describing one example of a method of removing the battery module 100 from the lower case 210. Hereinafter, the method of removing the battery module 100 from the lower case 210 is referred to as a method of removing the battery module 100 according to necessity. One example of a method of removing the battery module 100 is described with reference to Figs. 5 and 3.

As illustrated in Fig. 5, the left protrusion 122 defines a left tapped hole 132. The left tapped hole 132 extends through the left protrusion 122 substantially parallel to the Z direction. The left tapped hole 132 overlaps with the left support portion 216a in the Z direction. The left protrusion 122 and the left tapped hole 132 are located at the substantially central portion of the battery module 100 in a direction substantially parallel to the Z direction. The right protrusion 124 defines a right tapped hole 134. The right tapped hole 134 extends through the right protrusion 124 substantially parallel to the Z direction. The right tapped hole 134 overlaps with the right support portion 216b in the Z direction. The left tapped hole 132 and the right tapped hole 134 are located at the substantially central portion of the battery module 100 in a direction substantially parallel to the Z direction.

The substantially central portion of the battery module 100 in a direction substantially parallel to the Z direction is a portion located at a substantially equal distance from the lower surface of the lower cover 116 and the upper surface of an upper cover 118 of the battery module 100 in a direction substantially parallel to the Z direction. The substantially central portion of the battery module 100 in a direction substantially parallel to the Z direction includes not only an exact central portion of the battery module 100 in a direction substantially parallel to the Z direction, but also a portion at a predetermined distance in the Z direction from the exact central portion of the battery module 100 in a direction substantially parallel to the Z direction. The predetermined distance is within a range that a person skilled in the art would understand that an intended purpose is achievable by the central portion of the battery module 100 in a direction substantially parallel to the Z direction. For example, the substantially central portion of the battery module 100 in a direction substantially parallel to the Z direction may be displaced in the Z direction from the exact central portion of the battery module 100 in a direction substantially parallel to the Z direction by a distance of 10% or less, 7.5% or less, or 5.0% or less of a dimension of the battery module 100 in the Z direction.

The left eyebolt 172 is insertable into the left tapped hole 132. Specifically, the left eyebolt 172 is screwable into the left tapped hole 132. As described above, the left protrusion 122 and the left tapped hole 132 are located at the substantially central portion of the battery module 100 in a direction substantially parallel to the Z direction. Thus, the accessibility of the left eyebolt 172 to the left tapped hole 132 from above the left protrusion 122 can be improved and the workability of removal of the battery module 100 can be improved as compared to the case where the left protrusion 122 and the left tapped hole 132 are displaced downward from the substantially central portion of the battery module 100 in a direction substantially parallel to the Z direction. In addition, the space for routing of wiring such as a bus bar and a harness can be easily secured above the left protrusion 122 as compared to the case where the left protrusion 122 and the left tapped hole 132 are displaced upward from the substantially central portion of the battery module 100 in a direction substantially parallel to the Z direction. Accordingly, the workability of removal of the battery module 100 and the ease of securing of a space for routing of wiring can be easily balanced when the left protrusion 122 and the left tapped hole 132 are located at the substantially central portion of the battery module 100 in a direction substantially parallel to the Z direction.

The right eyebolt 174 is insertable into the right tapped hole 134. Specifically, the right eyebolt 174 is screwable into the right tapped hole 134. As described above, the right protrusion 124 and the right tapped hole 134 are located at the substantially central portion of the battery module 100 in a direction substantially parallel to the Z direction. Thus, the accessibility of the right eyebolt 174 to the right tapped hole 134 from above the right protrusion 124 can be improved and the workability of removal of the battery module 100 can be improved as compared to the case where the right protrusion 124 and the right tapped hole 134 are located below the substantially central portion of the battery module 100 in a direction substantially parallel to the Z direction. In addition, the space for routing of wiring such as a bus bar and a harness can be easily secured above the right protrusion 124 as compared to the case where the right protrusion 124 and the right tapped hole 134 are displaced upward from the substantially central portion of the battery module 100 in a direction substantially parallel to the Z direction. Accordingly, the workability of removal of the battery module 100 and the ease of securing of a space for routing of wiring can be easily balanced when the right protrusion 124 and the right tapped hole 134 are located at the substantially central portion of the battery module 100 in a direction substantially parallel to the Z direction.

In the example illustrated in Fig. 5, when the left bolt 162 is previously removed from the left protrusion 122 and the left support portion 216a, the lower end of the left eyebolt 172 contacts the upper surface of the left support portion 216a through the left tapped hole 132 by screwing the left eyebolt 172 into the left tapped hole 132 from above the left protrusion 122. Similarly, when the right bolt 164 is previously removed from the right protrusion 124 and the right support portion 216b, the lower end of the right eyebolt 174 contacts the upper surface of the right support portion 216b through the right tapped hole 134 by screwing the right eyebolt 174 into the right tapped hole 134 from above the right protrusion 124.

Next, in the example illustrated in Fig. 5, the left eyebolt 172 is further screwed into the left tapped hole 132 with the lower end of the left eyebolt 172 in contact with the upper surface of the left support portion 216a. The left protrusion 122 rises upward from the left support portion 216a by further tightening (i.e., screwing) the left eyebolt 172 with the lower end of the left eyebolt 172 in contact with the upper surface of the left support portion 216a. In other words, the left tapped hole 132 and the left eyebolt 172 are at least a portion of a screw jack that lifts the left protrusion 122 upward from the left support portion 216a. Moreover. In the example illustrated in Fig. 5, the right eyebolt 174 is further screwed into the right tapped hole 134 with the lower end of the right eyebolt 174 in contact with the upper surface of the right support portion 216b. The right protrusion 124 rises upward from the right support portion 216b by further tightening (i.e., screwing) the right eyebolt 174 with the lower end of the right eyebolt 174 in contact with the upper surface of the right support portion 216b. In other words, the right tapped hole 134 and the right eyebolt 174 are at least a portion of a screw jack that lifts the right protrusion 124 upward from the right support portion 216b. Thus, the lower surface of the lower cover 116 can be peeled off upward from the filler 150.

In the embodiment, the workability of removing the battery module 100 from the lower case 210 can be improved as compared to the case where the battery module 100 is simply lifted from the lower case 210. Specifically, in the embodiment, the battery module 100 can be lifted from the lower case 210 by the left eyebolt 172 and the right eyebolt 174. The battery module 100 can be therefore easily lifted from the lower case 210 as compared to the case where the battery module 100 is simply lifted from the lower case 210. Especially in the embodiment, even if the battery module 100 itself is relatively heavy, the battery module 100 can be easily lifted from the lower case 210 as compared to the case where the battery module 100 is simply lifted from the lower case 210. Further, in the embodiment, even if the lower surface of the lower cover 116 and the upper surface of the upper cooling plate 212a are joined to each other via the filler 150, the lower surface of the lower cover 116 can be easily peeled upward from the filler 150 by the left eyebolt 172 and the right eyebolt 174.

In the embodiment, the left eyebolt 172 and the right eyebolt 174 extend through the left protrusion 122 and the right protrusion 124 in the Z direction via the left tapped hole 132 and the right tapped hole 134 respectively. As the rigidity of each of the left protrusion 122 and the right protrusion 124 can be improved, therefore, the load on the battery cells 102 and the accommodation case 110 can be reduced when the battery module 100 is lifted by the left eyebolt 172 and the right eyebolt 174 and the battery module 100 is peeled from the filler 150. In the embodiment, accordingly, there may be no need for reinforcement to reduce the load on the battery cell 102 and the accommodation case 110 when the battery module 100 is lifted and the battery module 100 is peeled from the filler 150.

In the embodiment, when the battery module 100 is lifted by the left eyebolt 172 and the right eyebolt 174, the lower end of the left eyebolt 172 and the lower end of the right eyebolt 174 are in contact with the upper surface of the left support portion 216a and the upper surface of the right support portion 216b respectively. If the lower end of the left eyebolt 172 and the lower end of the right eyebolt 174 are in contact with the upper surface of the lower plate 212 to lift the battery module 100 with the left support portion 216a and the right support portion 216b not provided on the lower plate 212, there is a possibility that the lower plate 212 is deformed by force received from the lower end of the left eyebolt 172 and the lower end of the right eyebolt 174 when thickness of the lower plate 212 in the Z direction is relatively thin. Alternatively, there is a possibility that a cost of the lower plate 212 increases if a reinforcing member such as a rib is provided on a portion of the upper surface of the lower plate 212 that contacts the lower end of the left eyebolt 172 and the lower end of the right eyebolt 174 to prevent deformation of the lower plate 212. In the embodiment, on the other hand, the deformation of the lower plate 212 can be suppressed by force received from the lower end of the left eyebolt 172 and the lower end of the right eyebolt 174 when the battery module 100 is lifted, and the necessity of providing the reinforcing member described above on the upper surface of the lower plate 212 can be eliminated even if thickness of the lower plate 212 in the Z direction is relatively thin.

As illustrated in Fig. 3, the left protrusion 122 is provided with the two left tapped holes 132. The right protrusion 124 is provided with the two right tapped holes 134. In other words, the two left tapped holes 132 and the two right tapped holes 134 are provided in regions of the battery module 100 opposite to each other in the Y direction. In addition, the left tapped hole 132 and the right tapped hole 134 are located at substantially the same height in the Z direction. In this case, the battery module 100 can be easily removed from the lower case 210 as compared to the case where a tapped hole is provided in only one region of the battery module 100 in the Y direction or the case where the left tapped hole 132 and the right tapped hole 134 are located at different heights in the Z direction. A tapped hole, however, may be provided in only one region of the battery module 100 in the Y direction. The left tapped hole 132 and the right tapped hole 134 may be located at different heights in the Z direction.

The two left tapped holes 132 are arranged opposite to each other in the X direction relative to the center of the left protrusion 122 in the X direction. The left protrusion 122 can be therefore easily lifted from the left support portion 216a as compared to the case where only the one left tapped hole 132 is provided as the left tapped hole 132. Similarly, the two right tapped holes 134 are arranged opposite to each other in the X direction relative to the center of the right protrusion 124 in the X direction. The right protrusion 124 can be therefore easily lifted from the right support portion 216b as compared to the case where only the one right tapped hole 134 is provided as the right tapped hole 134. The left protrusion 122, however, may be provided with only one left tapped hole 132. Similarly, the right protrusion 124 may be provided with only one right tapped hole 134.

In the embodiment, the left eyebolt 172 and the right eyebolt 174 are used as penetrating members that are screwed into the left tapped hole 132 and the right tapped hole 134 to lift the battery module 100 from the lower case 210. As illustrated in Fig. 6, a pull-up member 180 such as a wire can be therefore easily hooked on the ring of the head of each of the left eyebolt 172 and the right eyebolt 174 as compared to the case where a normal bolt is used. As illustrated in Fig. 6, the battery module 100 can be lifted by pulling up the left eyebolt 172 and the right eyebolt 174 by the pull-up member 180 with the left eyebolt 172 and the right eyebolt 174 screwed into the left tapped hole 132 and the right tapped hole 134 respectively. Further, in the embodiment, as described above, the left protrusion 122, the right protrusion 124, the left tapped hole 132, and the right tapped hole 134 are located at the substantially central portion of the battery module 100 in a direction substantially parallel to the Z direction. Thus, the pull-up member 180 can be hooked on the center of gravity of the battery module 100 in the Z direction or the vicinity thereof, and the battery module 100 can be stably lifted by the pull-up member 180 as compared to the case where the left protrusion 122, the right protrusion 124, the left tapped hole 132, and the right tapped hole 134 are displaced in the Z direction from the substantially central portion of the battery module 100 in a direction substantially parallel to the Z direction. A penetrating member that is screwed into the left tapped hole 132 and the right tapped hole 134 to lift the battery module 100 from the lower case 210, however, is not limited to an eyebolt, and may be, for example, a normal bolt. A method of attaching the pull-up member 180 to the left eyebolt 172 and the right eyebolt 174 is not limited to hooking. A pull-up method of the left eyebolt 172 and the right eyebolt 174 is not limited to the method using the pull-up member 180. For example, the left eyebolt 172 and the right eyebolt 174 may be pulled up by a hand of a worker.

The left protrusion 122, the right protrusion 124, the left tapped hole 132, and the right tapped hole 134 may be located at a portion displaced upward from the substantially central portion of the battery module 100 instead of the substantially central portion of the battery module 100 in a direction substantially parallel to the Z direction. When the left protrusion 122 and the left tapped hole 132 are located at the portion displaced upward from the substantially central portion of the battery module 100, the accessibility of the left eyebolt 172 to the left tapped hole 132 from above the left protrusion 122 can be improved and the workability of removal of the battery module 100 can be improved as compared to the case where the left protrusion 122 and left tapped hole 132 are located at a portion displaced downward from the substantially central portion of the battery module 100. When the right protrusion 124 and the right tapped hole 134 are located at a portion displaced upward from the substantially central portion of the battery module 100, the accessibility of the right eyebolt 174 to the right tapped hole 134 from above the right protrusion 124 can be improved and the workability of removal of the battery module 100 can be improved as compared to the case where the right protrusion 124 and the right tapped hole 134 are located at a portion displaced downward from the substantially central portion of the battery module 100.

The embodiments according to the present invention have been described above with reference to the drawings, but these are exemplifications of the present invention, and various configurations other than those described above can also be adopted.

This application claims priority based on Japanese patent application No. 2022-178020, filed on November 7, 2022, the disclosure of which is incorporated herein in its entirety by reference.

### REFERENCE SIGNS LIST

10 Battery pack, 100 Battery module, 102 Battery cell, 102G Cell stack, 104 Terminal, 110 Accommodation case, 112 Left cover, 114 Right cover, 116 Lower cover, 116a Thermally conductive adhesive, 118 Upper cover, 122 Left protrusion, 124 Right protrusion, 132 Left tapped hole, 134 Right tapped hole, 150 Filler, 162 Left bolt, 164 Right bolt, 172 Left eyebolt, 174 Right eyebolt, 180 Pull-up member, 200 Accommodation body, 210 Lower case, 212 Lower plate, 212a Upper cooling plate, 212b Lower cooling plate, 212c Refrigerant, 214 Side frame, 216 Support frame, 216a Left support portion, 216b Right support portion, 220 Upper case, 230 Sealing member, 250 Accommodation space

## Claims

1. A battery pack comprising:
an accommodation body; and
a battery module accommodated **in** the accommodation body, wherein
the battery module defines a tapped hole overlapping at least a portion of the accommodation body.

2. The battery pack according to claim 1, wherein
the tapped hole is located at at least one of a substantially central portion of the battery module in a direction substantially parallel to a direction **in** which the tapped hole extends through the battery module, and a portion displaced from the substantially central portion of the battery module from a side where the at least a portion of the accommodation body is located toward a side where the tapped hole is located.

3. The battery pack according to claim 1, wherein
the tapped hole is located at a substantially central portion of the battery module **in** a direction substantially parallel to a direction **in** which the tapped hole extends through the battery module.

4. The battery pack according to any one of claims 1 to 3, wherein
at least two of the tapped holes are provided in opposite regions of the battery module.

5. The battery pack according to any one of claims 1 to 3, wherein
the at least a portion of the accommodation body has at least a portion of a frame surrounding at least a portion of the battery module.

6. A method of removing a battery module comprising:
a step of screwing a penetrating member into a tapped hole of a battery module accommodated in an accommodation body; and
a step of further screwing the penetrating member into the tapped hole with at least a portion of the penetrating member and at least a portion of the accommodation body overlapping with the tapped hole in contact with each other.

7. The method of removing the battery module according to claim 6, wherein
the tapped hole is located at at least one of a substantially central portion of the battery module in a direction substantially parallel to a direction in which the tapped hole extends through the battery module, and a portion displaced from the substantially central portion of the battery module from a side where the at least a portion of the accommodation body is located toward a side where the tapped hole is located.

8. The method of removing the battery module according to claim 6, wherein
the tapped hole is located at a substantially central portion of the battery module in a direction substantially parallel to a direction in which the tapped hole extends through the battery module.

9. The method of removing the battery module according to any one of claims 6 to 8, wherein
at least two of the tapped holes are provided in opposite regions of the battery module.

10. The method of removing the battery module according to any one of claims 6 to 8, wherein
the at least a portion of the accommodation body has at least a portion of a frame surrounding at least a portion of the battery module.

11. The method of removing the battery module according to any one of claims 6 to 8, further comprising
a step of pulling up the battery module by pulling up the penetrating member with the penetrating member screwed into the tapped hole.
